# EUROPEAN PATENT SPECIFICATION

(11) **EP 3 926 380 B1**
(45) Date of publication and mention of the grant of the patent: **07.02.2024**
(21) Application number: 20181029.8
(22) Date of filing: 19.06.2020
(51) Int. Cl.: G02B 7/182, G02B 27/64, G02B 27/01

(54) **MIRROR MOUNT FOR A HEAD-UP DISPLAY**
SPIEGELHALTERUNG FÜR EIN HEAD-UP-DISPLAY
MONTAGE DE MIROIR POUR UN AFFICHAGE TÊTE HAUTE

(43) Date of publication of application: 22.12.2021
(73) Proprietor: Jabil Inc., St. Petersburg, Florida 33716 (US)
(72) Inventor: KOVACS, Ernst, 2514 Traiskirchen (AT)
(74) Representative: Gruber, Philipp

(56) References cited:
- JP-A- 2017 076 092
- US-A1- 2019 285 889

## Description

The present invention relates to a mirror mount for a Head-Up Display, the mirror mount comprising two substantially coaxial bores for being pivotably suspended in a housing about an axis by means of bearing pins.

A head-up display or HUD is a transparent display panel that presents information to a user without requiring users to look away from a preferred viewing direction. The origin of the name stems from a pilot being able to view information with the head positioned "up" and looking forward, instead of angled down looking at lower instruments. Although they were initially developed for military aviation, HUD systems are nowadays used in commercial aircraft, automobiles, and other applications.

For example, a driver can view traffic and the road in front of the vehicle through the windshield of the vehicle while at the same time a projector projects information onto the windshield. Such a HUD system typically comprises a video data source such as a computer, a projector, and a mirror for deflecting the output of the projector onto the windshield.

Mirror positioning mechanisms require careful consideration to ensure the performance in all kinds of environmental conditions such as changing humidity and a wide range of temperatures especially within a dashboard of a car. A key design consideration relates to vibration. A mobile HUD system must have a high resistance to vibration in order to provide a stable image for the user. Failure to control vibration associated with the mirror in particular can result in a display that is irritating for the viewer and unpleasant to use over extended periods. Accordingly, a mirror and its respective mirror mount in a HUD system should have a high stability and a high natural frequency.

Thus the mirror needs to be positioned very rigid in the operating position to prevent vibration and reduced image quality. Therefore, a mirror holder and the connecting mount on the car body have to be very stiff.

To achieve this, the mirror itself is usually mounted on a mirror mount, which is in turn mounted in a housing in such a way that it can pivot about a mirror axis. For mounting the mirror mount in the housing, usually the housing comprises two holes, within which the mirror mount is suspended. However, due to the size of the housing, the holes in the housing and the corresponding bores in the mirror mount cannot be manufactured at the same time, which can lead to alignment errors. This results in unwanted tensions in the mirror mount, causing the mounting of the mirror to be too tight. Due to the small rotation angles, so-called stick-slip effects can occur, which further complicates an exact calibration. On the other hand enlarging the bores to allow easy rotation would lead to backlash, which would cause an inaccurate positioning and allows movement under vibration, leading to an unstable, blurry picture. US 2019/285889 discloses a mirror mount for a pivotable mirror in a head-up display.

The aim of the invention is thus to achieve a mirror system for a Head-Up Display that overcomes the above-mentioned drawbacks.

This aim is achieved by a mirror mount for a Head-Up Display, the mirror mount comprising two substantially coaxial bores for being pivotably suspended in a housing about an axis by means of bearing pins, wherein each bore of the mirror mount is provided with a bushing in the respective bore, wherein the mirror mount comprises two radially acting springs for spring-loading each bushing against the mirror mount in a radial direction and an axially acting spring for spring-loading at least one of the bearing pins with respect to the mirror mount in an axial direction.

The inventive mirror system has the advantage that alignment errors of the holes and bores can be overcome by means of spring-loading the mirror mount with respect to the housing. This causes the mirror mount to pivot smoothly about the mirror axis defined by the holes and bores without being affected by alignment errors of said holes and bores. By combining radially acting springs with axially acting springs, the bushing can be arranged within a possibly misaligned bore while still enabling a smooth pivoting movement of the mirror mount about the bearing pins. The spring forces are preferably larger than acceleration forces during vibration in the dashboard, and thus the pins cannot change position such that the reflected image stays steady and clear to view for the drive.

Preferably, the radially acting springs are torsion springs having two legs, wherein one leg is biased against a seat in the mirror mount and the other leg is biased against the respective bushing. In practice, such torsion springs can be easily mounted within the mirror mount to spring-load the bushings against the mirror mount. Alternatively, a compression spring could be used for the radially acting spring, which would however have disadvantages while setting the spring.

In the above-mentioned embodiment, it is preferred if at least one of the bushings has a notch for receiving the respective leg of the leg spring. This serves as an axial form-fitting of the bushing in the mounted position and furthermore supports an even application of force from the spring onto the bushing.

Further preferably, the axially acting spring is a compression spring and is arranged within one of the bores to spring-load the bearing pin with respect to the mirror mount in the axial direction. For the axially acting spring, using a compression spring has shown to be preferable due to an easier mounting of the mirror mount within the housing. The axial spring cancels a possible gap in axial direction and pushes the mirror against the axial reference plane.

In a preferred embodiment, the mirror mount comprises a sliding pin arranged on the side of the radially acting spring facing the bearing pin. The sliding pin serves to reduce noise that occurs during movement of the mirror mount with respect to the bearing pin.

In said embodiment, it is further preferred if a sliding disk is arranged within one of the bores for supporting the bearing pin that is not spring-loaded.

Advantageously, the sliding pin and/or the sliding disk are made out of plastic, which has shown to yield a further improved noise reduction compared to other materials.

In a preferred embodiment, at least one of the bushings is configured to support the respective bearing pin on three contact points. This allows the bearing pin to freely rotate about the axis without too much friction while still being securely held within the bushing without backlash.

Further preferably, at least one of the bushings has a slit and two joints to achieve a flexibility in radial directions. The slit and joints allow a flexing of the bearing by the spring to allow a three-point contact to the bearing pin in the mounting positon of the mirror mount in any tolerance situation. Thus, the bearing pin can be efficiently supported by the bushing, allowing a smooth pivoting movement of the mirror mount about the bearing pins.

In said embodiment it is preferred if the joints are formed by recesses in the respective bushing. By means of this, the bushing can be formed as a single piece while still having joints. The slit and joints are aligned in a direction parallel to the axis about which the mirror mount pivots.

Further preferably, at least one of the bores has a substantially quadratic cross-section area and the bushings have a corresponding cross-section area to achieve a form-fitting with respect to rotation in the bore. While other rotationally asymmetric cross sections like triangular or polygonal cross-sections would also achieve a form-fitting with respect to rotation in the bore, the quadratic cross-section is especially suited in the embodiment in which the bushing has a slit and two joints.

To achieve a form-fitting with respect to a movement along the axial direction of the bore and/or with respect to rotation in the bore, at least one of the bushings has a radially protruding nose.

When mounted, the mirror mount in any of the described embodiments together with the housing and two bearing pins forms a mirror system having the same advantages described above for the mirror mount.

For the mirror system it is preferred if it comprises two screws threaded into the housing next to a bearing pin, each screw for restricting the movement of one of the bearing pins in the axial direction. By means of the screws, the mirror mount can be efficiently suspended within the housing,

Further details and advantages of the mirror mount for a head-up display according to the invention will become more apparent in the following description and the accompanying drawings.

In a second aspect, the invention relates to a housing for mounting a mirror mount for a Head-Up Display, the housing comprising two substantially coaxial bores for pivotably suspending the mirror mount about an axis by means of bearing pins, wherein each bore of the housing is provided with a bushing in the respective bore, and wherein the housing comprises two radially acting springs for spring-loading each bushing against the housing in a radial direction and an axially acting spring for spring-loading at least one of the bearing pins with respect to the housing in an axial direction.

This is a mechanically "reversed" embodiment of the inventive mirror mount described above. Therefore, all embodiments and advantages detailed above for the mirror system can also be applied for the inventive housing.
Figure 1 shows a mirror mount and a housing in a perspective view.
Figure 2 shows the process of mounting of the mirror mount and housing of Figure 1.
Figure 3a shows a detail of an axially spring-loaded bore in a cross-sectional view.
Figure 3b shows a detail of a spring-loaded bore that is not axially spring-loaded in a cross-sectional view.
Figure 4 shows a schematic view of a torsion spring radially acting onto a bushing.
Figure 5 shows a cross-sectional view of the bushing of Figure 4.
Figure 6 shows the bushing of Figures 4 and 5 in a perspective view.

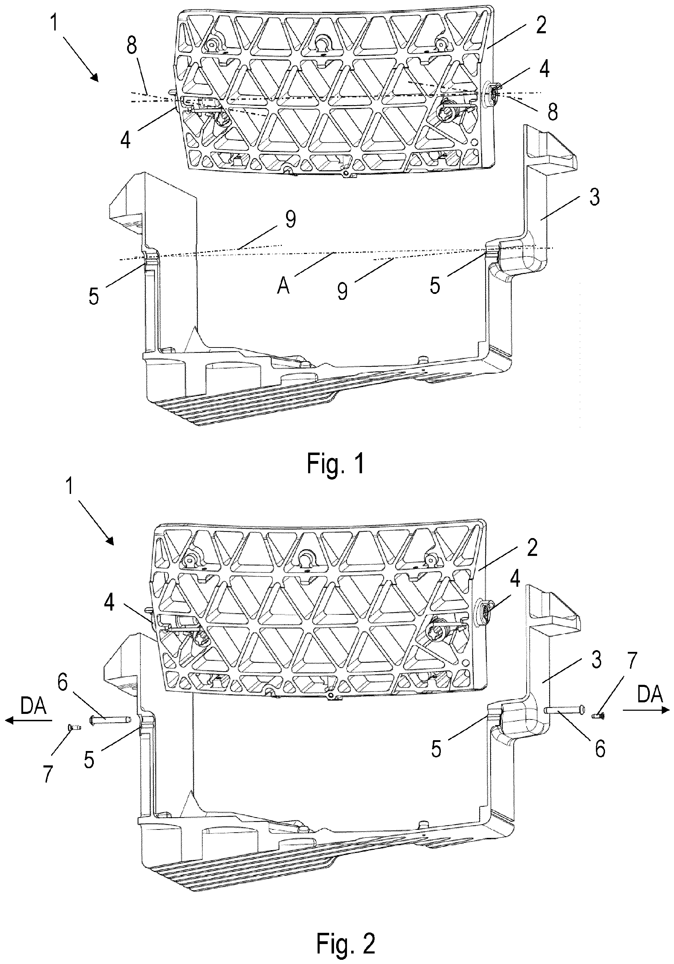

Figure 1 shows a mirror system 1 comprising a mirror mount 2 and a housing 3. The mirror system 1 is especially designed to be employed in a Head-Up Display (HUD) in which a image projector projects information via a mirror mounted on the mirror mount 2 onto a windshield of a vehicle, for example. Herein, the housing 3 could be formed integrally with a dashboard of the vehicle or alternatively be mounted thereon.

The mirror mount 2 comprises two substantially coaxial bores 4 for being pivotably suspended within the housing 3 about an axis A. To this end, the housing 3 itself has two holes 5, each one of which lie adjacent to one of the bores 4 in a mounted position of the mirror mount 2 in the housing 3.

To suspend the mirror mount 2 within the housing 3, two bearing pins 6 (Figure 2) are lead through the bores 4 and holes 5, i.e., one bearing pin 6 is inserted into one bore 4 and adjacent hole 5 and the other bearing pin 6 into the respective other bore 4 and respective other hole 5. To prevent the bearing pin 6 from exiting the bore 4 and hole 5, two screws 7 are used, each one being threaded into the housing 3 next to one of the bearing pins 6. Each screw 7 thus restricts the movement of one of the bearing pins 6 in an axial direction DA. Other restraining means other than screws 7 can be employed, too.

In Figure 1 it can furthermore be seen that bores 4 were manufactured along axes 8 that deviate from the axis A about which the mirror mount 2 is supposed to pivot. Similarly, due to manufacturing imprecisions, the holes 5 were manufactured along axes 9 that deviate from the axis A. As such, the bores 4 and holes 5 are only substantially coaxial. To nevertheless ensure a smooth rotation of the mirror mount 2 about the axis A, measures as will be described in the following have been taken.

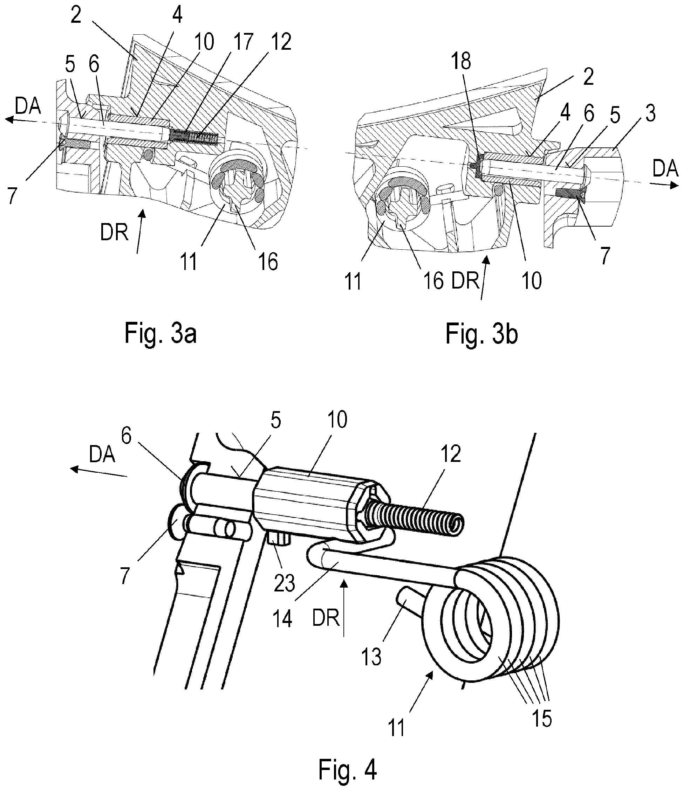

Figures 3a and 3b show that each bore 4 of the mirror mount 2 is provided with a bushing 10 in the respective bore 4. The bushing 10 is form-fitted into the respective bore 4 to ensure that the bearing pin 6 inserted therein can move freely within the bushing 10 without the bushing 10 moving with respect to the mirror mount 2.

To compensate for the alignment errors of the axes 8, 9, the mirror mount 2 comprises two radially acting springs 11 for spring-loading each bushing 10 against the mirror mount 2 in a radial direction DR. Furthermore, the mirror mount 2 comprises an axially acting spring 12 for spring-loading at least one of the bearing pins 6 with respect to mirror mount 2 in an axial direction DA. In other words, the radially acting springs 11 press the bushing 10 against the mirror mount 2 in a direction normal to the axis A and the axially acting spring 12 presses one of the bearing pins 6 away from the mirror mount 2, i.e., out of the bore 4 and bushing 10, respectively.

Said axial direction DA is to be understood as any direction parallel to the axis A and said radial direction DR is to be understood as any direction normal to the axis A. In the shown embodiment of Figures 3a and 3b, the two radially acting springs 11 apply force onto the bushing 10 in the same direction. Alternatively, the two radially acting spring 11 could also apply force in different directions, as long as they are substantially normal to the axis A.

In the embodiments shown in Figures 3 and 4, the radially acting springs 11 are torsion springs having two legs 13, 14, wherein one leg 13 is biased against a seat in the mirror mount 2 and the other leg 14 is biased against the respective bushing 10. Torsion springs usually have a plurality of windings 15, which are in the present case located around a mounting bolt 16 of the mirror mount 2 to ensure a safe fit of the torsion spring. The leg 14 abutting against the bushing 10 is furthermore bent in a direction normal to the axis A to ensure a uniform transmission of force onto the bushing 10.

Alternatively, instead of using a torsion spring, the radially acting spring 11 could also be embodied as a compression spring or any other type of spring.

The mirror mount 2 comprises only one axially acting spring 12. Figure 3a shows one bore 4 with an axially acting spring 12 and Figure 3b shows the respective other bore 4 of the same mirror mount 2 without an axially acting spring 12. Alternatively, also one axially acting spring 12 could be used for each bushing 10, although this would lead to a system with too many degrees of freedom. In the shown embodiments, the axially acting spring 12 is a compression spring, but also here a torsion spring or any other type of spring could be used.

The axially acting spring 12 is inserted into the bore 4 of the mirror mount 2 as is shown in Figure 3a. To spring-load the bearing pin 6 with respect to mirror mount 2, the axially acting spring 12 abuts with one end on a taper or end of the bore 4 and with the other end against the bearing pin 6, i.e., the axially acting spring 12 presses the bearing pin 6 away from the mirror mount 2.

To reduce noises caused by the relative movement between the bearing pin 6 and the mirror mount 2, a sliding pin 17 can be inserted in the bore 4 between the axially acting spring 12 and the bearing pin 6. Similarly, a sliding disk 18 can be arranged in the bore 4 between the mirror mount 2 and the bearing pin 6. To efficiently reduce noise occurring between the bearing pin 6 and the mirror mount 2, the sliding pin 17 and sliding disk 18 are made out of plastic. In such embodiments, the bearing pin 2 can directly abut on the sliding pin 17 and/or sliding disk 18. Furthermore, other materials such as metals or ceramics could be used too.

Figures 4 to 6 show the bushing 10 in detail. To allow the bushing 10 and thus also the mirror mount 2 to rotate freely about the bearing pin 6, the bushing 10 is configured to support the respective bearing pin 6 on three contact points 19. To this end, the bushing 10 can have three inner surfaces that are aligned with respective angles towards each other. Alternatively, more than three contact points 19 or a smooth inner surface could be utilised too.

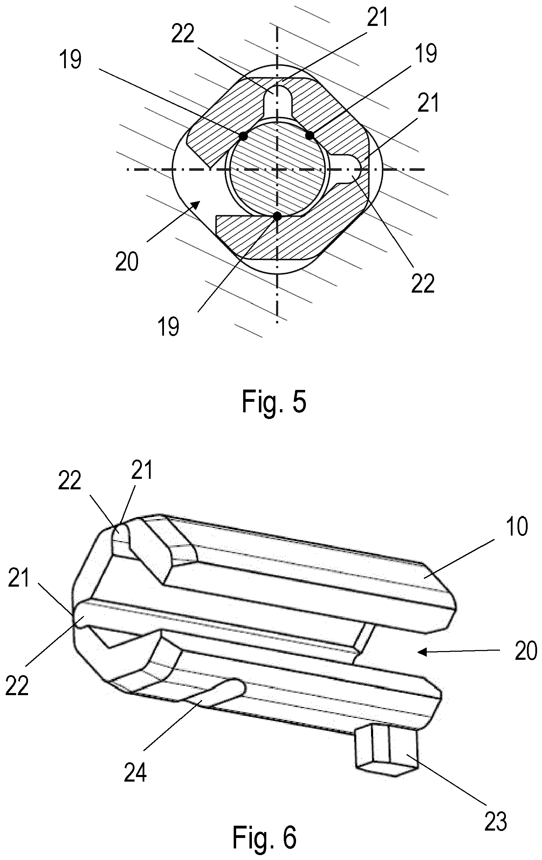

Furthermore, from Figure 5 it can be seen that the bushing 10 has a slit 20 and two joints 21 to achieve a bearing play in the axial direction DA. As the radially acting spring 11 applies force onto the bushing 10, the slit 20 and the joints 21 allow the bushing 10 to change its inner diameter. For example, if the bushing has three inner contact points 19, the distance between the contact points 19 can be adapted to the bearing pin 6 to overcome manufacturing misalignments of the bore 4. Said joints 21 can be formed by recesses 22 in the bushing 10. Alternatively, joints that are more complex could be employed in the bushing 10, too.

More generally, the bushing 10 can be a plain bearing and/or be a solid bushing, a slit bushing, or a clenched bushing.

Each bore 4 can furthermore have a substantially quadratic cross-section area and the bushings 10 can have a corresponding cross-section area to achieve a form-fitting with respect to rotation in the bore 4. Alternatively, other polygonal cross-section areas could be chosen to achieve the form-fitting.

Alternatively or additionally, each bushing 10 can further have a radially protruding nose 23 to achieve a form-fitting with respect to a movement along the axial direction DA of the bore 4. The bore 4 can have a corresponding recess for the nose 23 such that the nose 23 can easily be oriented in the mirror mount 2 and also achieve a form-fitting with respect to rotation in the bore 4.

Furthermore, each bushing 10 can have a notch 24 for receiving the respective leg 14 of the radially acting torsion spring 11. The notch 24 has the purpose of achieving a form-fitting in an axial direction DA and also to ensure that force is evenly applied onto the bushing 10.

In most embodiments, the both bushings 10 of the mirror mount 2 are of the same type. In some embodiments, however, the bushings 10 can have different features. For example, only one bushing 10 could have a slit 20, one or more joints 21, a nose 23 of a notch 24.

In an alternative embodiment (not shown), the mirror mount could be provided with holes through which the bearing pins are led and the housing has two substantially coaxial bores, in each of which a bushing as described above for the mirror mount is provided. As this is a mechanically "reversed" embodiment, it is to be understood that all embodiments described above by means of figures 1 - 6 can also be applied for this embodiment. In this case, when the mirror mount is suspended in the housing and screws are used to restrict the axial movement of the mirror mount, the two screws are threaded into the mirror mount next to the bearing pins.

## Claims

1. Mirror mount (2) for a Head-Up Display, the mirror mount (2) comprising two substantially coaxial bores (4) for being pivotably suspended in a housing (3) about an axis (A) by means of bearing pins (6),
**characterised in that** each bore (4) of the mirror mount (2) is provided with a bushing (10) in the respective bore (4),
wherein the mirror mount (2) comprises two radially acting springs (11) for spring-loading each bushing (10) against the mirror mount (2) in a radial direction (DR) and an axially acting spring (12) for spring-loading at least one of the bearing pins (6) with respect to the mirror mount (2) in an axial direction (DA).

2. Mirror mount (2) according to claim 1, wherein the radially acting springs (11) are torsion springs having two legs (13, 14), wherein one leg (13) is biased against a seat in the mirror mount (2) and the other leg (14) is biased against the respective bushing (10), wherein at least one of the bushings (10) preferably has a notch (24) for receiving the respective leg (14) of the torsion spring (11)

3. Mirror mount (2) according to claim 1 or 2, wherein the axially acting spring (12) is a compression spring and is arranged within one of the bores (4) to spring-load the bearing pin (6) with respect to the mirror mount (2) in the axial direction (DA).

4. Mirror mount (2) according to any one of claims 1 to 3, comprising a sliding pin (17) arranged on the side of the compression spring (12) facing the bearing pin (6), wherein the sliding pin (17) is preferably made out of plastic.

5. Mirror mount (2) according to claim 3 or 4, comprising a sliding disk (18) arranged within one of the bores (4) for supporting the bearing pin (6) that is not spring-loaded, wherein the sliding disk (18) is preferably made out of plastic.

6. Mirror mount (2) according to any one of claims 1 to 5, wherein at least one of the bushings (10) is configured to support the respective bearing pin (6) on three contact points (19).

7. Mirror mount (2) according to any one of claims 1 to 6, wherein at least one of the bushings (10) has a slit (20) and two joints (21) to achieve a bearing play in the axial direction (DA), wherein the joints (21) are preferably formed by recesses (22) in the respective bushing (10).

8. Mirror mount (2) according to any one of claims 1 to 7, wherein at least one of the bores (4) has a substantially quadratic cross-section area and the corresponding bushing (10) has a matching cross-section area to achieve a form-fitting with respect to rotation in the bore (4).

9. Mirror mount (2) according to any one of claims 1 to 8, wherein at least one of the bushings (10) has a radially protruding nose (23) to achieve a form-fitting in the bore (4).

10. Mirror system (1) comprising the mirror mount (2) according to any one of claims 1 to 9, the housing (3) and the two bearing pins (6), wherein the mirror mount (2) is suspended within the housing (3) by means of the bearing pins (6), wherein the mirror system (1) preferably comprises two screws (7) threaded into the housing (3) next to the bearing pins (6), each screw (7) for restricting the movement of one of the bearing pins (6) in the axial direction (DA).

11. Housing for mounting a mirror mount for a Head-Up Display, the housing comprising two substantially coaxial bores for pivotably suspending the mirror mount about an axis by means of bearing pins,
**characterised in that** each bore of the housing is provided with a bushing in the respective bore,
wherein the housing comprises two radially acting springs for spring-loading each bushing against the housing in a radial direction and an axially acting spring for spring-loading at least one of the bearing pins with respect to the housing in an axial direction.

12. Housing according to claim 11, wherein the radially acting springs are torsion springs having two legs, wherein one leg is biased against a seat in the housing and the other leg is biased against the respective bushing, wherein at least one of the bushings preferably has a notch for receiving the respective leg of the torsion spring.

13. Housing according to claim 11 or 12, wherein the axially acting spring is a compression spring and is arranged within one of the bores to spring-load the bearing pin with respect to the housing in the axial direction.

14. Housing according to any one of claims 11 to 13, wherein at least one of the bushings has a slit and two joints to achieve a bearing play in the axial direction, wherein the joints are preferably formed by recesses in the respective bushing.

15. Mirror system comprising the housing according to any one of claims 11 to 14, the mirror mount and the two bearing pins, wherein the mirror mount is suspended within the housing by means of the bearing pins, wherein the mirror system preferably comprises two screws threaded into the mirror mount next to the bearing pins, each screw for restricting the movement of one of the bearing pins in the axial direction.

## Patentansprüche

1. Spiegelhalterung (2) für ein Head-up-Display, wobei die Spiegelhalterung (2) zwei im Wesentlichen koaxiale Bohrungen (4) zur schwenkbaren Aufhängung in einem Gehäuse (3) um eine Achse (A) mittels Lagerbolzen (6) umfasst,
**dadurch gekennzeichnet, dass** jede Bohrung (4) der Spiegelhalterung (2) mit einer Buchse (10) in der jeweiligen Bohrung (4) versehen ist,
wobei die Spiegelhalterung (2) zwei radial wirkende Federn (11) zur Federbelastung jeder Buchse (10) gegen die Spiegelhalterung (2) in einer radialen Richtung (DR) und eine axial wirkende Feder (12) zur Federbelastung mindestens eines der Lagerbolzen (6) gegenüber der Spiegelhalterung (2) in einer axialen Richtung (DA) umfasst.

2. Spiegelhalterung (2) gemäß Anspruch 1, wobei die radial wirkenden Federn (11) Torsionsfedern mit zwei Schenkeln (13, 14) sind, wobei ein Schenkel (13) gegen einen Sitz in der Spiegelhalterung (2) vorgespannt ist und der andere Schenkel (14) gegen die jeweilige Buchse (10) vorgespannt ist, wobei mindestens eine der Buchsen (10) vorzugsweise eine Einkerbung (24) zur Aufnahme des jeweiligen Schenkels (14) der Torsionsfeder (11) aufweist.

3. Spiegelhalterung (2) gemäß Anspruch 1 oder 2, wobei die axial wirkende Feder (12) eine Druckfeder ist und innerhalb einer der Bohrungen (4) angeordnet ist, um den Lagerbolzen (6) gegenüber der Spiegelhalterung (2) in axialer Richtung (DA) unter Federbelastung zu setzen.

4. Spiegelhalterung (2) gemäß einem der Ansprüche 1 bis 3, umfassend einen Gleitstift (17), der auf der dem Lagerbolzen (6) zugewandten Seite der Druckfeder (12) angeordnet ist, wobei der Gleitstift (17) vorzugsweise aus Kunststoff gefertigt ist.

5. Spiegelhalterung (2) gemäß Anspruch 3 oder 4, umfassend eine Gleitscheibe (18), die innerhalb einer der Bohrungen (4) zum Lagern des nicht federbelasteten Lagerbolzens (6) angeordnet ist, wobei die Gleitscheibe (18) vorzugsweise aus Kunststoff gefertigt ist.

6. Spiegelhalterung (2) gemäß einem der Ansprüche 1 bis 5, wobei mindestens eine der Buchsen (10) dazu konfiguriert ist, den jeweiligen Lagerbolzen (6) an drei Kontaktpunkten (19) abzustützen.

7. Spiegelhalterung (2) gemäß einem der Ansprüche 1 bis 6, wobei mindestens eine der Buchsen (10) einen Schlitz (20) und zwei Gelenke (21) aufweist, um ein Lagerspiel in axialer Richtung (DA) zu erreichen, wobei die Gelenke (21) vorzugsweise durch Aussparungen (22) in der jeweiligen Buchse (10) gebildet sind.

8. Spiegelhalterung (2) gemäß einem der Ansprüche 1 bis 7, wobei mindestens eine der Bohrungen (4) eine im Wesentlichen quadratische Querschnittsfläche aufweist und die entsprechende Buchse (10) eine dazu passende Querschnittsfläche aufweist, um in der Bohrung (4) einen Formschluss in Bezug auf eine Drehung zu erreichen.

9. Spiegelhalterung (2) gemäß einem der Ansprüche 1 bis 8, wobei mindestens eine der Buchsen (10) eine radial vorstehende Nase (23) aufweist, um in der Bohrung (4) einen Formschluss zu erreichen.

10. Spiegelsystem (1), umfassend die Spiegelhalterung (2) gemäß einem der Ansprüche 1 bis 9, das Gehäuse (3) und die beiden Lagerbolzen (6), wobei die Spiegelhalterung (2) innerhalb des Gehäuses (3) mittels der Lagerbolzen (6) aufgehängt ist, wobei das Spiegelsystem (1) vorzugsweise zwei neben den Lagerbolzen (6) in das Gehäuse (3) eingeschraubte Schrauben (7) umfasst, wobei jede Schraube (7) zum Begrenzen der Bewegung eines der Lagerbolzen (6) in axialer Richtung (DA) dient.

11. Gehäuse zum Befestigen einer Spiegelhalterung für ein Head-up-Display, wobei das Gehäuse zwei im Wesentlichen koaxiale Bohrungen zur schwenkbaren Aufhängung der Spiegelhalterung um eine Achse mittels Lagerbolzen umfasst,
**dadurch gekennzeichnet, dass** jede Bohrung des Gehäuses mit einer Buchse in der jeweiligen Bohrung versehen ist,
wobei das Gehäuse zwei radial wirkende Federn zur Federbelastung jeder Buchse gegen das Gehäuse in einer radialen Richtung und eine axial wirkende Feder zur Federbelastung mindestens eines der Lagerbolzen gegenüber dem Gehäuse in einer axialen Richtung umfasst.

12. Gehäuse gemäß Anspruch 11, wobei die radial wirkenden Federn Torsionsfedern mit zwei Schenkeln sind, wobei ein Schenkel gegen einen Sitz im Gehäuse vorgespannt ist und der andere Schenkel gegen die jeweilige Buchse vorgespannt ist, wobei mindestens eine der Buchsen vorzugsweise eine Einkerbung zur Aufnahme des jeweiligen Schenkels der Torsionsfeder aufweist.

13. Gehäuse gemäß Anspruch 11 oder 12, wobei die axial wirkende Feder eine Druckfeder ist und innerhalb einer der Bohrungen angeordnet ist, um den Lagerbolzen gegenüber dem Gehäuse in axialer Richtung unter Federbelastung zu setzen.

14. Gehäuse gemäß einem der Ansprüche 11 bis 13, wobei mindestens eine der Buchsen einen Schlitz und zwei Gelenke aufweist, um ein Lagerspiel in axialer Richtung zu erreichen, wobei die Gelenke vorzugsweise durch Aussparungen in der jeweiligen Buchse gebildet sind.

15. Spiegelsystem, umfassend das Gehäuse gemäß einem der Ansprüche 11 bis 14, die Spiegelhalterung und die beiden Lagerbolzen, wobei die Spiegelhalterung innerhalb des Gehäuses mittels der Lagerbolzen aufgehängt ist, wobei das Spiegelsystem vorzugsweise zwei neben den Lagerbolzen in die Spiegelhalterung eingeschraubte Schrauben umfasst, wobei jede Schraube zum Begrenzen der Bewegung eines der Lagerbolzen in axialer Richtung dient.

## Revendications

1. Monture de miroir (2) pour un affichage tête haute, la monture de miroir (2) comprenant deux alésages sensiblement coaxiaux (4) pour être suspendue de manière pivotante dans un logement (3) autour d'un axe (A) au moyen de broches de palier (6),
**caractérisé en ce que** chaque alésage (4) de la monture de miroir (2) est muni d'un manchon (10) dans l'alésage respectif (4),
dans laquelle la monture de miroir (2) comprend deux ressorts à action radiale (11) pour charger par ressort chaque manchon (10) contre la monture de miroir (2) dans une direction radiale (DR) et un ressort à action axiale (12) pour charger par ressort au moins une des broches de palier (6) par rapport à la monture de miroir (2) dans une direction axiale (DA).

2. Monture de miroir (2) selon la revendication 1, dans laquelle les ressorts à action radiale (11) sont des ressorts de torsion présentant deux branches (13, 14), dans laquelle une branche (13) est sollicitée contre un siège dans la monture de miroir (2) et l'autre branche (14) est sollicitée contre le manchon respectif (10), dans laquelle au moins un des manchons (10) présente de préférence une encoche (24) pour recevoir la branche respective (14) du ressort de torsion (11).

3. Monture de miroir (2) selon la revendication 1 ou 2, dans laquelle le ressort à action axiale (12) est un ressort de compression et est agencé à l'intérieur de l'un des alésages (4) pour charger par ressort la broche de palier (6) par rapport à la monture de miroir (2) dans la direction axiale (DA).

4. Monture de miroir (2) selon l'une quelconque des revendications 1 à 3, comprenant une broche coulissante (17) agencée sur le côté du ressort de compression (12) faisant face à la broche de palier (6), dans laquelle la broche coulissante (17) est de préférence réalisée en plastique.

5. Monture de miroir (2) selon la revendication 3 ou 4, comprenant un disque coulissant (18) agencé à l'intérieur de l'un des alésages (4) pour supporter la broche de palier (6) qui n'est pas chargée par ressort, dans laquelle le disque coulissant (18) est de préférence réalisé en plastique.

6. Monture de miroir (2) selon l'une quelconque des revendications 1 à 5, dans laquelle au moins l'un des manchons (10) est configurée pour supporter la broche de palier respective (6) sur trois points de contact (19).

7. Monture de miroir (2) selon l'une quelconque des revendications 1 à 6, dans laquelle au moins l'un des manchons (10) présente une fente (20) et deux joints (21) pour obtenir un jeu de palier dans la direction axiale (DA), dans laquelle les joints (21) sont de préférence formés par des évidements (22) dans le manchon respectif (10).

8. Monture de miroir (2) selon l'une quelconque des revendications 1 à 7, dans laquelle au moins l'un des alésages (4) présente une surface de section transversale sensiblement quadratique et le manchon correspondant (10) présente une surface de section transversale correspondante pour réaliser un ajustement de forme par rapport à une rotation dans l'alésage (4).

9. Monture de miroir (2) selon l'une quelconque des revendications 1 à 8, dans laquelle au moins l'un des manchons (10) présente un nez faisant saillie radialement (23) pour réaliser un ajustement de forme dans l'alésage (4).

10. Monture de miroir (1) comprenant la monture de miroir (2) selon l'une quelconque des revendications 1 à 9, le logement (3) et les deux broches de palier (6), dans laquelle le monture de miroir (2) est suspendue à l'intérieur du logement (3) au moyen des broches de palier (6), dans laquelle le système de miroir (1) comprend de préférence deux vis (7) vissées dans le logement (3) à côté des broches de palier (6), chaque vis (7) pour limiter le déplacement de l'une des broches de palier (6) dans la direction axiale (DA).

11. Logement pour monter la monture de miroir pour un affichage tête haute, le logement comprenant deux alésages sensiblement coaxiaux pour suspendre de manière pivotante la monture de miroir autour d'un axe au moyen de broches de palier,
**caractérisé en ce que** chaque alésage du logement est muni d'une manchon dans l'alésage respectif,
dans lequel le logement comprend deux ressorts à action radiale pour charger par ressort chaque manchon contre le logement dans une direction radiale et un ressort à action axiale pour charger par ressort au moins une des broches de palier par rapport au logement dans une direction axiale.

12. Logement selon la revendication 11, dans lequel les ressorts à action radiale sont des ressorts de torsion présentant deux branches, dans lequel une branche est sollicitée contre un siège dans le logement et l'autre branche est sollicitée contre le manchon respectif, dans lequel au moins un des manchons présente de préférence une encoche pour recevoir la branche respective du ressort de torsion.

13. Logement selon la revendication 11 ou 12, dans lequel le ressort à action axiale est un ressort de compression et est agencé à l'intérieur de l'un des alésages pour charger par ressort la broche de palier par rapport au logement dans la direction axiale.

14. Logement selon l'une quelconque des revendications 11 à 13, dans lequel au moins l'un des manchons présente une fente et deux joints pour obtenir un jeu de palier dans la direction axiale, dans lequel les joints sont de préférence formés par des évidements dans le manchon respectif.

15. Système de miroir comprenant le logement selon l'une quelconque des revendications 11 à 14, la monture de miroir et les deux broches de palier, dans lequel la monture de miroir est suspendue à l'intérieur du logement au moyen des broches de palier, dans lequel le système de miroir comprend de préférence deux vis vissées dans la monture de miroir à côté des broches de palier, chaque vis pour limiter le déplacement de l'une des broches de palier dans la direction axiale.
